# EUROPEAN PATENT APPLICATION

(11) **EP 2 889 074 A1**
(43) Date of publication of application: **01.07.2015**
(21) Application number: 15155320.3
(22) Date of filing: 04.06.2010
(51) Int. Cl.: B01D 53/50, B01D 53/18, B01D 53/78, B01D 53/79

(54) **Method for adding oxygen to a liquid absorbent in a device for purifying gas**

(30) Priority: 14.07.2009 SE 0950559
(62) Divisional of application: 10800111.6
(71) Applicant: Marketing I Konsulting Per Anders Brattemo, 30-222 Krakow (PL)
(72) Inventor: Brattemo, Per Anders, 30-222 Krakow (PL)
(74) Representative: Noréns Patentbyrå AB

(57) **Abstract**

The invention is characterised in that the device (1) is caused to comprise a circulation device (16) for absorbent, arranged to bring absorbent from a first place in the device (1) to a second place in the device (1), in that the oxygen is added by addition of air to the absorbent at a first point in the circulation device (16), in that a separation device (16e) is caused to separate the gas contained in the absorbent off from the absorbent at a second point, which second point is arranged at a higher level than the first point, before the absorbent is brought back to the second place in the device (1), and in that a part of the oxygen contained in the air is caused to react with the compound before it reaches the separation device (16e).

## Description

The present method relates to a method for adding oxygen to a liquid absorbent in a device for purifying gas.

The method of the invention is particularly useful for the separation of sulfur dioxide and particles from flue gases from combustion of fossil fuels.

Conventionally, several different technologies are used for such flue gas purification, for example venturi scrubbers, bubble beds and spray towers, in which the flue gases are exposed to contact with a liquid absorbent, for example water containing an active ingredient such as lime, whereby the sulfur dioxide and the particles pass over to the absorbent. It is important to maximize the contact surface and time between the flue gases and the absorbent in the purification device for maximum yield.

Spray towers are often reliable, but since the drops of absorbent produced in the spray tower are comparatively large, they can only separate a limited part of the sulfur dioxide and the particles from the flue gases, if not built in a number of spraying levels. Therefore, spray towers tend to be very large and therefore expensive at large throughput volumes and high levels of separation.

Venturi scrubbers, on the other hand, produce finer drops that thereby separate a larger part of sulfur dioxide. However, they are expensive to operate. Bubble beds are also expensive to operate, since relatively large amounts of energy are required, for instance in the form of supplied stirring action in order to obtain a good yield, in combination with such beds often having to be quite high.

Thus, there is a need for a way to purify gases from gaseous pollutants and/or pollutants in the form of particles, which is both cheap and efficient, and which does not require all too bulky equipment, especially when it comes to purification of flue gases from fossil fuel combustion.

Moreover, when purifying sulfur dioxide from flue gases in scrubbers, using for example lime as the absorbent, it is necessary to add an oxidant, most often air, in order to oxidize the reaction products in the absorbent. This constitutes a problem for purifying flue gases from a so called oxyfuel burner, i.e. an industrial burner or power plant burner which is driven with an oxidant comprising more oxygen and less nitrogen than air. In general, flue gases from such burners comprise a large part carbon dioxide and water vapour, and subsequent carbon dioxide separation steps are in such cases often used. In case air is added to the absorbent, problems do however arise as any subsequent carbon dioxide separation steps must treat the nitrogen added via the air, which nitrogen then is present in the purified gases. Thus, a cost efficient method would be desirable that does not lead to nitrogen gas being added in large quantities to the purified gases.

The present invention solves these problems.

Thus, the present invention relates to a method for adding oxygen to a liquid absorbent in a device for purifying gas, which absorbent comprises at least one compound capable of reacting with oxygen, and is characterised in that the device is caused to comprise a circulation device for absorbent, arranged to bring absorbent from a first place in the device to a second place in the device, in that the oxygen is added by addition of air to the absorbent at a first point in the circulation device, in that a separation device is caused to separate the gas contained in the absorbent off from the absorbent at a second point, which second point is arranged at a higher level than the first point, before the absorbent is brought back to the second place in the device, and in that a part of the oxygen contained in the air is caused to react with the compound before it reaches the separation device.

The invention will now be described in detail, with reference to exemplifying embodiments of the invention and to the appended drawings, in which:
Figure 1 is a cross-sectional view of a device for purifying gas; and
Figure 2 is a detail view in cross-section of a venturi plate. Both figures share the same reference numerals for the same parts.

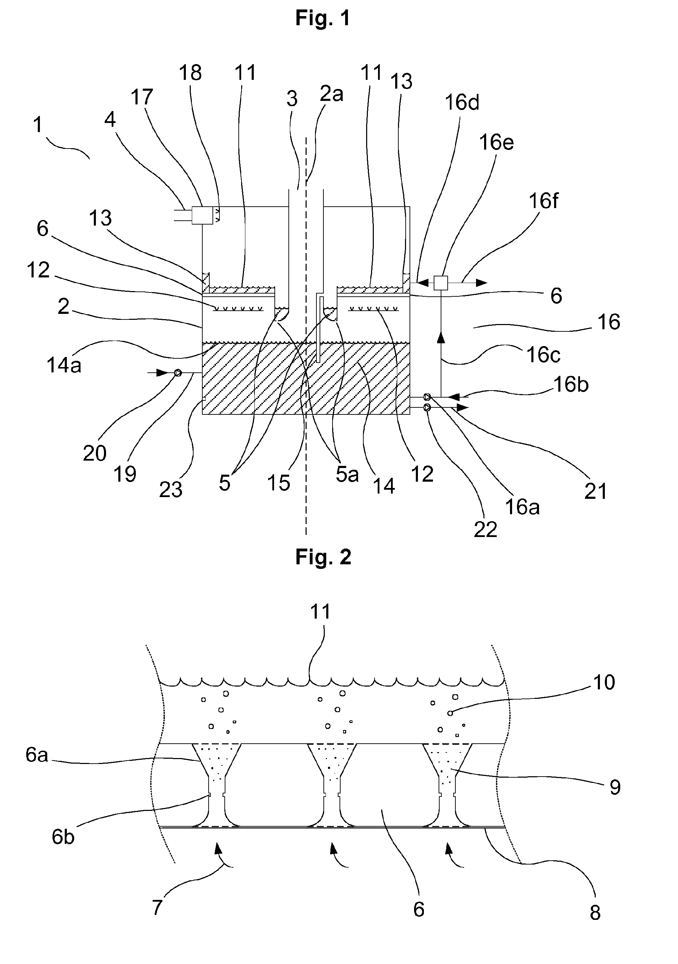

Figure 1 illustrates a device 1 according to the present invention, by the use of which a method according to the present invention advantageously can be performed. The device 1 comprises a housing 2, an inlet 3 for gas to be purified and one or several outlets 4 for purified gas. The gas, which preferably consists of flue gases from combustion of fossil fuel in an industrial burner or power plant burner, can be hot or already cooled in a previous step (not shown). The gas is added through inlet 3 using a supply device, which can be a fan device (not shown) arranged upstream or downstream of device 1, natural pressure from previous process steps or the corresponding.

The housing is preferably manufactured from a rigid material, preferably glass fiber reinforced plastic, metal or concrete with internal rubber coating. The inside of the housing is advantageously either made from plastic, gummed or executed in stainless steel, in order to withstand the chemical conditions inside the device 1.

From the inlet 3, the gas is conveyed on to and past a quenching device 5 that, via nozzles 5a, injects absorbent in the form of liquid jets that are partly reshaped into drops in the gas streaming past the jets. A certain part of the liquid evaporates as the temperature of the gas is lowered, and is conveyed in gaseous form onwards together with the gas to be purified. This will cool the gas to a desired process temperature. Suitable process temperatures after the quenching are between room temperature and 80°C, more preferably between 50°C and 70°C. Moreover, some of the drops are conveyed from the quenching device 5 in liquid phase onwards together with the gas streaming past the jets. Thus, using the quenching device both cooling and saturation is achieved of the gas streaming past, but also drop generation before the subsequent venturi step, which is described in the following.

The gas mixture is thus conveyed onwards to a venturi device 6 in the form of a plate comprising a multitude venturi tubes, arranged in the plate one next to the other and mutually parallel, in the form of through holes. The venturi device 6 is most clearly shown in figure 2, which illustrates venturi tubes 6a comprising a centrally arranged constriction in which the velocity of the gas increases, so that heavy turbulence is achieved when gas streams through the hole.

The gas thus streams 7 from below up to and in through the parallel venturi tubes 6a, at the entrance of which it brings with it liquid drops from a liquid film 8, preferably water and absorbent, arranged on the lower side of the venturi device 6. The drops contained in the gas and originating from the previous quenching, together with liquid carried from the film 8, streams with the gas through the venturi tubes 6a, and therein form very small droplets 9 of absorbent because of the heavy turbulence. Since several venturi tubes 6a are used in parallel in this way, a very large contact surface between gas and absorbent, and good dispersion of the droplets in the gas, is achieved, resulting in high yield regarding purification of the gas.

In order to further improve the capability of the venturi tubes 6a to form small droplets of the absorbent liquid, it is preferred that each tube 6a comprises a small shoulder 6b at the place for the constriction inside the tube 6a. The shoulder 6b is preferably shaped as a small, abrupt projection from the inner wall of the tube 6a, advantageously in the form of a circular projection, and has the purpose of additionally increasing the turbulence of the gas streaming through the tube 6a.

In order to make sure that the film 8 does not dry up, thereby causing a risk for buildup and clogging, a wetting device 12, for example in the form of a series of spray nozzles, is arranged to continuously wet the lower side of the venturi device 6.

The upper side of the venturi device 6 supports a liquid bed 11 of moving absorbent, which is continuously filled via a filler device 13, for example in the form of a tray. The absorbent pours from the filling device 13, across the upper side of the venturi device 6 and down into a filling tray in the quenching device 5. Thus, the pouring absorbent forms the bed 11 of absorbent above the venturi device 6. At the same time the quenching device 5 is continuously replenished with absorbent, which is sprayed out through nozzles 5a.

After the mixture of gas and small droplets of absorbent have passed the venturi tubes 6a, the gas rises up through the liquid bed 11 in the form of bubbles 10. Since the stream of gas/droplet mixture out from the plurality of venturi tubes 6a is heavily turbulent, a good mixture of absorbent in the bed 11 is achieved. This guarantees a very large contact surface between absorbent and gas also in the liquid bed 11, and thereby also high yield in terms of gas purification.

The absorbent conveyed by the gas through the venturi tubes 6a remains in the liquid bed 11 and is carried with the latter towards the quenching device 5.

The absorbent which is sprayed out as liquid jets from the quenching device 5 is conveyed in part, as described above, in gaseous and liquid phase by the gas streaming past and thereafter again into and through the venturi device 6. The rest of the absorbent instead falls down and is collected in a basin 14 arranged under the quenching device 5.

An overflow device 15 is connected to the filling tray of the quenching device 5, and opens out into the basin 14, so that absorbent is led via the overflow device 15 and down into the basin in case the surface of the absorbent in the filling tray of the quenching device 5 exceeds above a predetermined level. This leads to that the amount of absorbent used in the quenching device 5 can be kept at a suitable level in a simple way even in case large amounts of absorbent are added from the bed 11.

In order to maintain the liquid level in the bed 11, the filling device 13 is continuously replenished with absorbent via a recirculation system 16 for absorbent liquid, being externally arranged in relation to the housing 2, comprising an exit conduit below the surface 14a of the basin 14. A pump 16a is arranged to pump absorbent from the basin 14, into and up through a riser pipe 16c and via an inlet conduit 16d to the filler device 13, for onwards transport to the liquid bed 11. The operation of the pump 16a is controlled, using a suitable known control device (not shown), so that a suitable liquid depth is maintained in the liquid bed 11. Alternatively, a suitable known valve device (not shown) in the filler device 13 can be controlled, using the control device, so that a suitable level is maintained in the bed 11. The control system may be connected, on the one hand, to the pump 16a and/or to the valve device, and, on the other hand, to a suitable known level meter (not shown) for liquid level in the bed 11.

It is preferred that the recirculation system 16 is designed with such capacity that all liquid in the basin 14 can be circulated about 25 times per hour.

The gas having been purified in the venturi device 6 and the liquid bed 11 then streams on to the outlet 4, via a droplet separator 17 which is conventional as such and which is wetted by a wetting device 18 similar to the wetting device 12, with the aim of avoiding buildup and clogging.

Thus, the gas streams into the housing 2 via the inlet 3, past the quenching device 5 and into a space which is downwards limited by the surface 14a, and which is essentially upwards limited by the lower side of the venturi device 6. No gas can stream past the venturi device 6 via the quenching device 5, since it is sealed by the absorbent in the filling tray.

According to the preferred embodiment illustrated in figure 1, the device is essentially circular symmetric, whereby the housing is designed in the form of a cylinder, along the central axis 2a of which the gas is brought in through the inlet 3. In other words, figure 1 is presented as a cross-section through the central axis 2a of the cylindrical housing 2. The venturi device 6 and the liquid bed 11 are hence arranged in the form of a circular symmetric ring surrounding the centrally arranged inlet conduit 3 above the round, circular symmetric basin 14. Furthermore, the housing 2, the venturi device 6, the bed 11 and the basin 14 are coaxially arranged. Such geometry will result in a number of advantages.

In addition to that the construction can be made compact and will be sturdy, the process of applying gum to the inside of the housing, in case such gum is used, is simplified in the case a cylindrical device 1 is used. Moreover, the flow of absorbent liquid and gas will be more favorable, harmful pressure gradients and sedimentation will for example not occur as much as for instance in quadratic or other geometries with corners. The filler device 13 can in a simple way be arranged essentially around the whole liquid bed, from where absorbent can flow in a symmetric manner outside in, towards one and the same circular symmetric exit constituted by the filling tray of the quenching device 5. In this way, an even and controlled flow of absorbent in the liquid bed 11 is ensured. If so is needed, several outlets 4 for purified gas can also be arranged around the envelope circumference of the housing 2.

According to a preferred embodiment, the purification device 1 is designed for purification of between about 80 000 and 1 000 000 Nm³/h gas. To this end, it is preferred that the housing 2 has an inner diameter of between 4 and 15 meters.

The distance between the quenching device 5 and the liquid surface 14a, i.e. the height of the passage through which the gas streams on its way between the inlet 3 and the space limited by the liquid surface 14a and the venturi device 6, is preferably between 20 cm and 2 meters. According to a preferred embodiment, the height of the surface of the liquid 14a is adjusted, by adding or removing absorbent using existing filling- and tapping systems, so that the height of said passage is adapted to the amount of gas to be purified per time unit. If the gas stream is decreased, an increase of the liquid level 14a is thus performed, so that the stream through the passage becomes more turbulent and so that the gas therefore brings with it the quenching liquid in a more efficient way.

When the gas is bubbled through the liquid bed 11, the latter expands, because of the space which is occupied by the gas bubbles in the liquid, so that the liquid depth in the bed 11 increases. In a non-expanded state, the depth of the liquid bed 11 is preferably about between 20 and 40 centimeters. In an expanded state, i.e. during full operation, the depth of the liquid bed is preferably about between 1 and 2 meters. This is however heavily dependent upon the desired collection efficiency, the viscosity of the absorbent and other factors.

The plate of the venturi device 6 is, according to a preferred embodiment, between about 50 and 80 millimeters high, and therefore the length of the venturi tubes 6a are also equally tall. The entrances of the tubes 6a in the plate preferably cover about 15% of the bottom surface of the plate, and are preferably arranged evenly distributed across the lower side of the plate. The constriction of each venturi tube is preferably between about 10 and 30 millimeters of diameter, any shoulders 6b not counted. Preferably, the venturi device 6 comprises at least about 100, more preferably at least 500, venturi tubes 6a working in parallel.

Preferably, the plate is manufactured from a rigid and resistant material, which is also chemically resistant against the gas and the absorbent. Examples comprise rigid plastics such as polypropylene and acid-proof metals.

According to a preferred embodiment, the device 1 is used for separating sulphur dioxide from flue gases from combustion of fossil fuel, such as natural gas, oil, coal, etc. As absorbent can for this purpose be used for instance water supplemented with lime and/or limestone, which in this case forms a slurry with comparatively high viscosity. Moreover, oxygen may be added to the absorbent, so that the sulphur dioxide finally forms gypsum (CaSO₄ · 2H₂O), which may be collected and used later, through the following reaction formulas:

CaCO₃ + SO₂ → CaSO₃ + CO₂

CaSO₃ + H₂O + ½O₂ → CaSO₄ + H₂O

According to a preferred embodiment, the absorbent in the basin 14 contains about 97-98% of solid gypsum and about 2-3% of solid limestone in powder form during operation.

In figure 1, there is illustrated a supply conduit 19 for absorbent and a pump 20 for pumping in additional absorbent in the form of for example lime and water in a suitable mixing ratio, into the basin 14. Furthermore, there is an outlet conduit 21 for the reaction products, in combination with an additional pump 22. In the case with the above described reactions, the formed gypsum is separated, and is run through a conventional hydrocyclone (not shown). Thereafter, the small gypsum crystals are brought back to the device 1, while the larger ones are taken away for further treatment.

A device 1 in accordance with the present invention is also efficient for separating particles from the gas, which particles are then also transported away via the outlet conduit 21.

A sensor device 23, which is known as such, is arranged in the basin 14 with the purpose of measuring the mass ratio between lime and gypsum in the basin 14, for example by measuring the density in the absorbent in the basin 14 and then, based thereupon, to calculate the said mass ratio. On basis of the measured density, the amount of reaction products transported away by the pump 22 is controlled. The amount of lime added is at the same time controlled so that it corresponds to the amount of sulphur separated using the device 1, which amount sulphur is established by measuring the pH in the absorbent, also using the sensor device 23. The above-mentioned control device is thus arranged to control, by regulating the pump 20, the supply of new lime and liquid to the basin 14 through the supply conduit 19, so that this mass ratio is kept at a constant level. In this way, among other things it is achieved that a change in the gas stream through, and the amount of absorbed SO₂ in, the device 1, affecting how quickly the added lime is converted, can be met so that an efficient absorption at all times can be maintained.

Said control device is also preferably arranged to control the pumps 20, 22, so that the liquid level 14a is such that the distance between the liquid level 14a and the quenching device 5 is suitable for the current stream velocity, as explained above.

It is preferred that the oxidant required to oxidize CaSO₃ to CaSO₄ according to the above reaction formula is added to the absorbent being transported in the riser pipe 16c, in which the main oxidation of CaSO₃ also takes place. Conveniently, the supply of oxygen takes place via addition of air via a supply conduit 16b at the bottom of the riser pipe 16c.

According to a very preferred embodiment, the gas which is to be purified consists of flue gases from an oxyfuel burner, and the gaseous compound contents of the liquid absorbent present in the riser pipe 16c are separated using a separation device 16e at the upper end of the riser pipe, before the absorbent is added to the bed 11, and is transported away from the device 1 via an outlet conduit 16f.

In other words, the oxidant is added to the absorbent in the recirculation device 16 at a first point at the bottom of the riser pipe 16c, and the nitrogen content in the added oxidant is led off from the absorbent at a second point, arranged higher than the first point and before the absorbent again joins the rest of the absorbent in the device 1.

Such an arrangement will secure that sufficient amounts of oxygen can be added to the absorbent during its transport upwards through the riser pipe 16c, at the same time as the contents of the added air of nitrogen, remaining oxygen and other gases that are considered pollutants under the circumstances are not allowed to enter the device 1 and there being mixed with the purified gas. Hence, in this way a cheap way is achieved of avoiding the problems with contained nitrogen in purified flue gases from oxyfuel burners during later carbon dioxide separation steps.

According to a preferred embodiment, the separation device 16e consists of a water trap through which the absorbent is caused to flow, and from the upper part of which contained nitrogen and other gases are separated.

Preferably, the device 1 is equipped with between 4 and 12 riser pipes, according to the above described, evenly distributed along the tube-shaped envelope surface of the housing 2, in order to guarantee an even flow and to avoid large concentration gradients in the absorbent.

According to the invention, the gas streams through the venturi tubes 6a downwards up, in other words against the direction of gravity. This leads to the advantage that the absorption of pollutants present in the gas to a certain extent can be made self regulating. Namely, in case the gas stream velocity decreases, the amount of absorbent will to a certain extent penetrate down, against the gas stream, into the venturi tubes 6a from the bed 11 of absorbent arranged above the venturi tubes 6a. This absorbent penetrating downwards will decrease the effective size of the constriction in each respective venturi tube 6a, thereby increasing the venturi action in the sense that the turbulence of the gas streaming there through increases, whereby the absorption can be maintained despite less gas throughput.

Using a method according to the present invention to separate sulphur dioxide from flue gases, a very good mass transfer of sulphur from the gas to the absorbent can be achieved due to a very large total contact surface between gas and absorbent in the quenching device 5, the venturi device 6 and the bed 11. Collecting efficiencies of up to 99% are generally possible to achieve, without the energy costs being higher than for conventional technology. As a comparison, it can be mentioned that conventional spray towers normally have collecting efficiencies of about 85-95%, in certain cases up to 97-98%. Moreover, it is possible to design a device according to the present invention, for carrying out such a method, in a compact and non-bulky way, and which at the same time requires a minimal supply of energy since there is no need for heating and since the energy requirements for the circulation of absorbent is limited.

Furthermore, flue gases from oxyfuel burners can be treated cheaply and reliably without nitrogen being added to the purified gas, thereby complicating subsequent carbon dioxide separation steps.

Above, preferred embodiments have been described. However, it is apparent to the skilled person that many modifications can be made to the described embodiments without departing from the idea of the invention. Thus, the invention shall not be limited to the described embodiments, but can be varied within the scope of the enclosed claims.

## Claims

1. Method for adding oxygen to a liquid absorbent in a device (1) for purifying gas, which absorbent comprises at least one compound capable of reacting with oxygen, **characterised in that** the device (1) is caused to comprise a circulation device (16) for absorbent, arranged to bring absorbent from a first place in the device (1) to a second place in the device (1), **in that** the oxygen is added by addition of air to the absorbent at a first point in the circulation device (16), **in that** a separation device (16e) is caused to separate the gas contained in the absorbent off from the absorbent at a second point, which second point is arranged at a higher level than the first point, before the absorbent is brought back to the second place in the device (1), and **in that** a part of the oxygen contained in the air is caused to react with the compound before it reaches the separation device (16e).

2. Method according to claim 1, **characterised in that** the device (1) is arranged to separate SO₂ contained in the gas by transformation to CaSO₃ and thereafter to CaSO₄, **in that** the transformation to CaSO₃ is caused to be achieved by reaction between the gas and lime and/or limestone comprised in the absorbent, and **in that** the transformation to CaSO₄ is caused to take place by reaction, between the first point and the second point in the circulation device (16), between the gas and the added oxygen.

3. Method according to claim 1 or 2, **characterised in that** the gas is caused to consist of flue gases from an industrial burner or power plant burner.

4. Method according to claim 3, **characterised in that** the gas is caused to consist of flue gases from an oxyfuel burner.

5. Method according to any one of the preceding claims, **characterised in that** the separation device (16e) is caused to be a water trap through which the absorbent is caused to flow, and from the upper part of which contained nitrogen and other gases are caused to be separated.

6. Method according to any one of the preceding claims, **characterised in that** the circulation device (16) is caused to be arranged to maintain a level of absorbent in a liquid bed (11) of absorbent by bringing absorbent from an absorbent container (14), arranged at a lower level, and **in that** the device (1) is caused to bring absorbent from the bed (11) to the container (14).

7. Method according to claim 6, **characterised in that** the first and second points are connected by a vertical riser pipe (16c) up through which the absorbent is pumped.

8. Method according to claim 6 or 7, **characterised in that** the circulation device (16) is designed with a capacity such that all liquid in the container (14) can be turned over about 25 times per hour.
